# EUROPEAN PATENT APPLICATION

(11) **EP 2 048 879 A1**
(43) Date of publication of application: **15.04.2009**
(21) Application number: 07768011.4
(22) Date of filing: 02.07.2007
(51) Int. Cl.: H04N 5/60, H04M 1/00, H04Q 7/38

(54) **ELECTRONIC DEVICE AND ELECTRONIC DEVICE SOUND VOLUME CONTROL METHOD**

(30) Priority: 04.08.2006 JP 2006212987
(71) Applicant: Panasonic Corporation, Kadoma-shi Osaka 571-8501 (JP)
(72) Inventor: KIMURA, Kazunobu c/o Panasonic Corporation I.P.R.O.C., Chuo-Ku Osaka 540-6207 (JP)
(74) Representative: Grünecker, Kinkeldey, Stockmair & Schwanhäusser Anwaltssozietät
(86) International application number: PCT/JP2007/063236
(87) International publication number: WO 2008/015864

(57) **Abstract**

A problem of the invention is to provide an electronic device and a volume control method of the electronic device capable of automatically controlling the volume when TV broadcast viewing is started or when headphones are attached/removed. To view a broadcast received in a TV broadcast data reception section (100) or play record data in a TV broadcast record data playing section (101), a sound output management section (109), a volume management section (110), and a UI management section (111) clearly manage running modes of usual running, manner running, headphone use running, etc., and automatically execute each running mode transition and volume control proper to the running mode transition with user operation of volume change, headphone attachment/removal, 1, etc., as a trigger. Accordingly, it is made possible for the user to view a TV and play record data independent of the use environment and the use style and the operability and the convenience of the user owning the electronic device capable of receiving a TV broadcast can be improved more than ever.

## Description

### Technical Field

This invention relates to an electronic device capable of receiving a TV broadcast and a volume control method of the electronic device.

### Background Art

In recent years, a high-performance mobile terminal including high definition liquid crystal, an image pickup device of high image quality, etc., has become widespread as an electronic device and in line with the widespread use thereof, various applications of Internet connection, mail transmission and reception, a videophone, analog TV broadcast reception, etc., has been installed in addition to usual telephone conversation. The receiving/viewing function of digital terrestrial TV broadcasting intended for mobile terminals (the full-scale service of the broadcasting began in 2006) also starts to be installed and is already available from several manufactures. Further, service starting of digital terrestrial sound broadcasting is also planned and installing the function of digital terrestrial sound broadcasting in a mobile terminal is also examined. For example, according to non-patent document 1, a mobile receiver capable of receiving both digital terrestrial TV broadcasting and digital terrestrial sound broadcasting is introduced and will be put on the market in the near future.

In such a background, it is considered that an occasion to receive/view digital terrestrial TV broadcasting or digital terrestrial sound broadcasting using a mobile terminal in a public place such as the inside of a train will increase in the future. At the time, it is necessary to give consideration to the surrounding persons, of course.

On the other hand, a manner mode intended for ring tone control, etc., in a public place is installed in a mobile telephone and a large number of relevant control methods are also introduced. For example, patent document 1 proposes a mobile terminal for enabling the user to preset not only a ring tone, but also microphone sensitivity, receiver sound volume, etc., by use mode and switch the mode by easy operation. Patent document 2 proposes a system that can automatically turn on/off the manner mode from the traveling speed for eliminating the need for the user moving at high speed to set the manner mode. The arts in both patent documents can provide the user with convenience beyond general manner mode operation.

Further, a mobile terminal for enabling the user to view digital terrestrial TV broadcasting even outdoor or inside a train without impairing information or entertainingness is also introduced. For example, patent document 3 shows a mechanism for converting sound data into text or subtitles for display in response to the environmental sound volume at the viewing time.

Patent document 1: JP-A-10-262280
Patent document 2: JP-A-2001-157268
Patent document 3: JP-A-2005-64592
Non-patent document 1: News Topics, [online], PIXELA CORPORATION, [search on March 24, 2006], Internet <URL:http://www.pixela.co.jp/news/2005/1216.html>

### Disclosure of the Invention

### Problems to be Solved by the Invention

However, in the mobile terminals capable of receiving a TV broadcast in the related arts, to view a TV broadcast in a public place such as the inside of a train, the user must often use headphones or mute the sound volume except for the method of text conversion, etc., as in patent document 3 described above. At this time, it is a common practice to use the final setup value at the preceding viewing time for the sound volume at the TV viewing time and therefore there is a possibility that a program may be played at a large volume level unexpected at the starting time depending on the previous viewing situation. Even if the user lessens the sound volume just after start and begins to view, if the user wants to switch to headphones midway, he or she again needs to make volume control of changing to the usual volume level, etc., after attachment of the headphones; there is a problem of burdensome operation for the user.

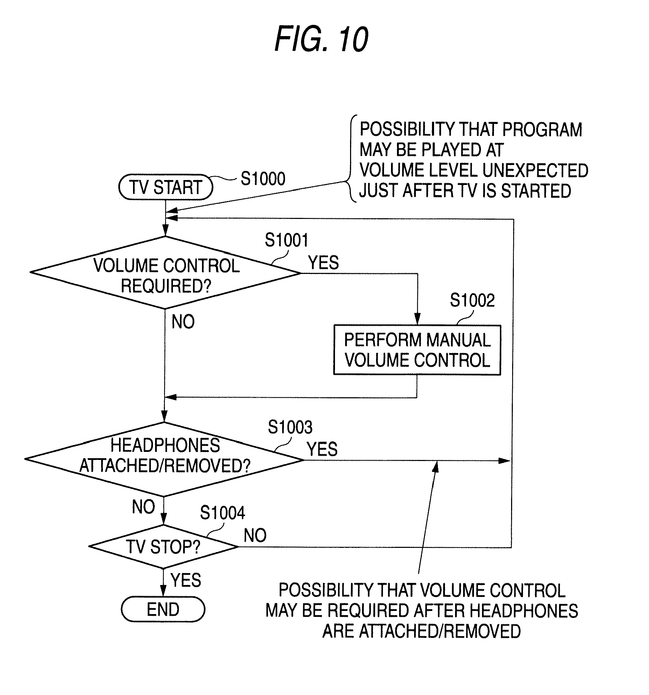

A description is given using a flowchart of FIG. 10. In the figure, when TV is started (step S1000), there is a possibility that a program may be played at a volume level unexpected just after the TV is started, and there is a risk of causing inconvenience to the surrounding persons. Then, whether or not volume control is required is determined (step S1001) and if volume control is required, volume control is executed (step S1002). The volume control at this time is performed manually by the user. After the volume control is executed, whether or not headphones are attached/removed is determined (step S1003). If headphones are attached/removed, the process returns to step S1001 and again whether or not volume control is required is determined. If headphones are not attached/removed, whether or not TV reception stops is determined (step S1004) and if TV reception does not stop, the flow in which the user executes manual volume control until TV reception terminates is repeated. If volume control is not required, the process goes to step S1003 from step S1001.

The invention is embodied considering the circumstances described above and it is an object of the invention to provide an electronic device and a volume control method of the electronic device capable of automatically controlling the volume when TV broadcast viewing is started or when headphones are attached/removed.

### Means For Solving the Problems

The above-mentioned object is accomplished according to the following configurations or methods:
(1) A running mode management method in TV broadcast viewing or record data playing of an electronic device including TV broadcast reception unit which receives a TV broadcast wave wherein running modes of usual start to usually view TV or record data, manner start to view TV or record data in a place where manners are required, headphone use usual start to usually view TV or record data with headphones, and headphone use manner start to view TV or record data with headphones in a place where manners are required are managed separately and transition of each of the running modes and volume control proper to the mode transition or the transition destination mode are performed with predetermined operation of the user as a trigger.

(2) In the running mode management method described above in (1), start operation, volume change operation, and headphone attachment/removal operation of the user are included.

(3) In the running mode management method described above in (1) or (2), the electronic device including TV broadcast reception unit which receives a TV broadcast wave is a mobile terminal.

(4) A volume control method in TV broadcast viewing or record data playing of an electronic device including TV broadcast reception unit which receives a TV broadcast wave wherein the user is allowed to set either a fixed value proper to the mode transition or the transition destination mode or the final setup value at the previous running time in the same mode as a volume initial value just after each running mode transition in response to each of running modes of usual start to usually view TV or record data, manner start to view TV or record data in a place where manners are required, headphone use usual start to usually view TV or record data with headphones, and headphone use manner start to view TV or record data with headphones in a place where manners are required.

(5) In the volume control method described above in (4), the user is allowed to make setting as to whether or not sound decoding processing is to be stopped at the volume muting time in response to each of the running modes.

(6) In the volume control method described above in (4) or (5), the electronic device including TV broadcast reception unit which receives a TV broadcast wave is a mobile terminal.

(7) An electronic device including TV broadcast reception unit which receives a TV broadcast wave and record data play unit which plays record data includes operation unit of the user and running mode management unit which separately manages running modes of usual start to usually view TV or record data, manner start to view TV or record data in a place where manners are required, headphone use usual start to usually view TV or record data with headphones, and headphone use manner start to view TV or record data with headphones in a place where manners are required and performs transition of each of the running modes and volume control proper to the mode transition or the transition destination mode with user's operation of the operation unit as a trigger.

(8) In the electronic device described above in (7), start operation, volume change operation, and headphone attachment/removal operation of the user are included.

(9) In the electronic device described above in (7) or (8), the running mode management unit sets the manner running mode when manner start operation is performed in unstarted, sets the manner running mode when running mode switching operation is performed in the usual running mode, sets the headphone use manner running mode when headphone use manner start operation is performed in unstarted, sets the headphone use manner running mode when running mode switching operation is performed in the headphone use usual running mode, sets the headphone use manner running mode when headphones are inserted in the manner running mode, and sets the manner running mode when headphones are removed in the headphone use manner running mode.

(10) The electronic device described above in any of [7] to [9] including volume control unit which allows the user to set either a fixed value proper to the mode transition or the transition destination mode or the final setup value at the previous running time in the same mode as a volume initial value just after each running mode transition in response to each of running modes of usual start to usually view TV or record data, manner start to view TV or record data in a place where manners are required, headphone use usual start to usually view TV or record data with headphones, and headphone use manner start to view TV or record data with headphones in a place where manners are required.

(11) In the electronic device described above in (10), the volume control unit allows the user to make setting as to whether or not sound decoding processing is to be stopped at the volume muting time in response to each of the running modes.

(12) In the electronic device described above in any of [7] to [11], the electronic device including TV broadcast reception unit which receives a TV broadcast wave and the record data play unit which plays record data is a mobile terminal.

(13) A controller capable of remotely controlling an electronic device for enabling the user to view a TV broadcast and play record data includes key input unit which performs manner start and running mode management unit which separately manages running modes of usual start to usually view TV or record data, manner start to view TV or record data in a place where manners are required, headphone use usual start to usually view TV or record data with headphones, and headphone use manner start to view TV or record data with headphones in a place where manners are required, sets the manner running mode when manner start operation is performed in unstarted, sets the manner running mode when running mode switching operation is performed in the usual running mode, sets the headphone use manner running mode when headphone use manner start operation is performed in unstarted, sets the headphone use manner running mode when running mode switching operation is performed in the headphone use usual running mode, sets the headphone use manner running mode when headphones are inserted in the manner running mode, and sets the manner running mode when headphones are removed in the headphone use manner running mode.

### Advantages of the Invention

In the running mode management method described above in (1), the volume is automatically controlled with predetermined operation of the user as a trigger, so that to view a TV broadcast or record data in a public place such as the inside of a train, if the user must use headphones or mute the volume from consideration to the surrounding persons, manner start can be conducted by single operation. That is, it is made possible for the user to always view a TV broadcast, etc., at a precise volume level without performing burdensome volume operation depending on the viewing environment and the viewing style.

In the running mode management method described above in (2), start operation, volume change operation, and headphone attachment/removal operation of the user are included, and advantages similar to those described above in (1) can be provided.

In the running mode management method described above in (3), the electronic device including TV broadcast reception unit which receives a TV broadcast wave is a mobile terminal, and advantages similar to those described above in (1) can be provided.

In the volume control method described above in (4), the user can freely set either a fixed value proper to the mode transition or the transition destination mode or the final setup value at the previous running time in the same mode as a volume initial value just after running mode transition in response to each of the running modes of usual start, manner start, headphone use start, etc.

In the volume control method described above in (5), the user can freely make setting as to whether or not sound decoding processing is to be stopped at the volume muting time in response to each of the running modes of usual start, manner start, headphone use start, etc., and moreover power saving can be accomplished by setting stopping of sound decoding processing.

In the volume control method described above in (6), the electronic device including TV broadcast reception unit which receives a TV broadcast wave is a mobile terminal, and advantages similar to those described above in (4) can be provided.

In the electronic device described above in (7), the volume is automatically controlled when TV broadcast or record data viewing is started or when headphones are attached or removed, so that to view a TV broadcast or record data in a public place such as the inside of a train, if the user must use headphones or mute the volume from consideration to the surrounding persons, manner start can be conducted by single operation. That is, it is made possible for the user to always view a TV broadcast, etc., at a precise volume level without performing burdensome volume operation depending on the viewing environment and the viewing style.

In the electronic device described above in (8), start operation, volume change operation, and headphone attachment/removal operation of the user are included, and advantages similar to those described above in (7) can be provided.

In the electronic device described above in (9), usual start, manner start, headphone use start, etc., can be performed by single operation.

In the electronic device described above in (10), the user can freely set either a fixed value proper to the mode transition or the transition destination mode or the final setup value at the previous running time in the same mode as a volume initial value just after running mode transition in response to each of the running modes of usual start, manner start, headphone use start, etc.

In the electronic device described above in (11), the user can freely make setting as to whether or not sound decoding processing is to be stopped at the volume muting time in response to each of the running modes of usual start, manner start, headphone use start, etc., and moreover power saving can be accomplished by setting stopping of sound decoding processing.

In the electronic device described above in (12), the electronic device including TV broadcast reception unit which receives a TV broadcast wave and record data play unit which plays record data is a mobile terminal, and advantages similar to those described above in (7) can be provided.

In the controller described above in (13), usual start, manner start, headphone use start, etc., can be performed by single operation. In addition to the mobile terminal described above, a PDA (Personal Digital Assistant), a personal computer, a portable TV, a stationary TV, a remote controller of a stationary TV, etc., is included as the electronic device.

### Brief Description of the Drawings

FIG. 1 is a block diagram to show the schematic configuration of an electronic device according to one embodiment of the invention.
FIG. 2 is a drawing to describe an example of mode management in the electronic device according to the embodiment.
FIG. 3 is a drawing to show volume management tables provided in the electronic device according to the embodiment.
FIG. 4 is a flowchart to show an example of control (usual start) at the mode transition time of the electronic device according to the embodiment.
FIG. 5 is a flowchart to show an example of control (manner start) at the mode transition time of the electronic device according to the embodiment.
FIG. 6 is a flowchart to show an example of control (usual start (HP)) at the mode transition time of the electronic device according to the embodiment.
FIG. 7 is a flowchart to show an example of control (manner start (HP)) at the mode transition time of the electronic device according to the embodiment.
FIG. 8 is a flowchart to show an example of control (common postprocessing) at the mode transition time of the electronic device according to the embodiment.
FIG. 9 is an image drawing of a mobile terminal as the electronic device according to the embodiment.
FIG. 10 is a flowchart to show an example of a TV start procedure in a mobile terminal in a related art.

### Description of Reference Numerals

- 100: TV broadcast data reception section
- 101: TV broadcast record data playing section
- 102: TV broadcast data separation section
- 103: TV broadcast data decoding section (Data)
- 104: TV broadcast data decoding section (Video)
- 105: TV broadcast data decoding section (Audio)
- 106: Display output control section
- 107: Synchronous control section
- 108: Sound output control section
- 109: Sound output management section
- 110: Volume management section
- 111: UI management section
- 112: Input/output control section
- 900: Mobile terminal
- 901: TV usual start key
- 902: TV manner start key
- 903: TV running mode switch key
- 904: LCD display section

### Best Mode for Carrying out the Invention

Preferred embodiments for carrying out the invention will be discussed in detail with reference to the accompanying drawings.

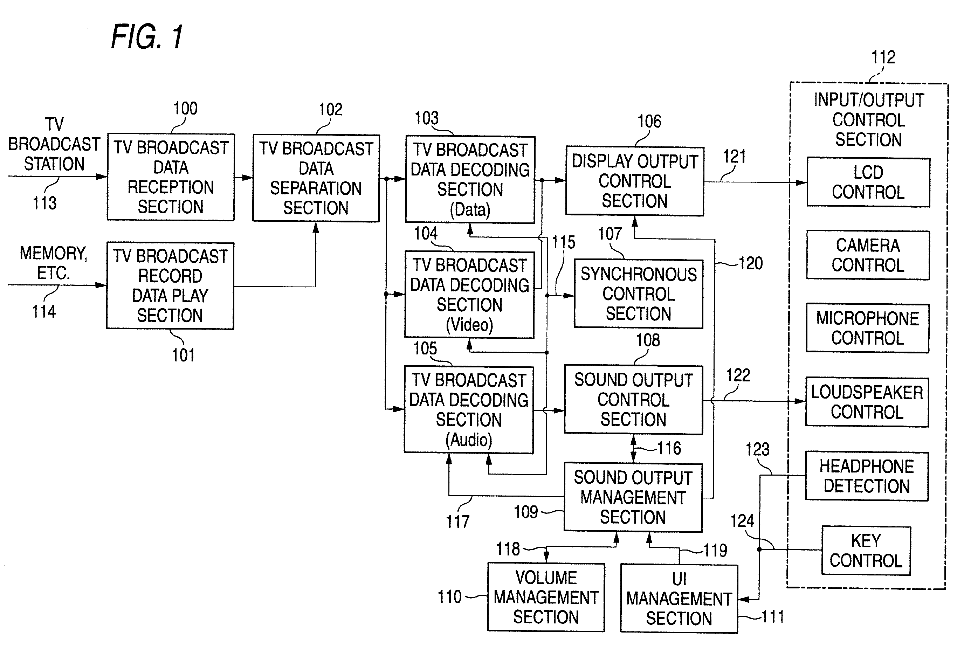

FIG. 1 is a block diagram to show the schematic configuration of an electronic device according to one embodiment of the invention. In the figure, the electronic device of the embodiment has a function of receiving a television (TV) broadcast and it is assumed that the TV broadcast is digital terrestrial TV broadcasting. Also, it is assumed that the electronic device of the embodiment is a mobile terminal. To implement a TV broadcast reception function, the electronic device of the embodiment includes as a data interface a TV broadcast data reception section 100 for performing baseband-based processing, etc., of broadcast data received via a data path 113 from a TV broadcast station and a TV broadcast record data playing section 101 for controlling record data input via a data path 114 from memory, etc. The reception data is subjected to stream separation in a TV broadcast data separation section 102, data-broadcast-based data is input to a TV broadcast data decoding section (Data) 103, video-based data is input to a TV broadcast data decoding section (Video) 104, and audio-based data is input to a TV broadcast data decoding section (Audio) 105.

The data-broadcast-based decoded data from the TV broadcast data decoding section 103 and the video-based decoded data from the TV broadcast data decoding section 104 are passed via a display output control section 106 to an input/output control section 112 over a data path 121. On the other hand, the audio-based decoded data is passed via a sound output control section 108 to the input/output control section 112 over a data path 122. The display output control section 106 performs creation, buffering, output timing control, etc., of display-based data. The sound output control section 108 performs creation, buffering, output timing control, etc., of sound-based data. Output synchronization between the display-based data and the sound-based data is accomplished under the control of a synchronous control section 107 for controlling the TV broadcast data decoding sections 103 to 105 over a control data path 115. The input/output control section 112 has functions of LCD (liquid crystal) control, camera control, microphone control, loudspeaker control, headphone detection, and key control.

A sound output management section 109 of a main component of the invention performs general management of volume control and running mode, etc., in conjunction with a volume management section 110 and a UI (User Interface) management section 111. The volume management section 110 manages the current volume level and the volume level at the next starting time according to a volume management table and sends appropriate information to the sound output management section 109 via a data path 118. The volume management section 110 also manages a power saving setting table at the volume muting time and the sound output management section 109 sends notification to the TV broadcast data decoding section (Audio) 105 via a data path 117 and decoding processing can be stopped/restarted. The UI management section 111 manages state change of the user interface caused by key operation, etc., and if headphone attachment/removal or key operation occurs, the UI management section receives notification from the input/output control section 112 via a data path 123, 124 and sends notification to the sound output management section 109 via a data path 119. The volume/running mode determined in the sound output management section 109 is sent to the display output control section 106 via a data path 120 and thus can be displayed on an LCD (Liquid Crystal Display), etc.

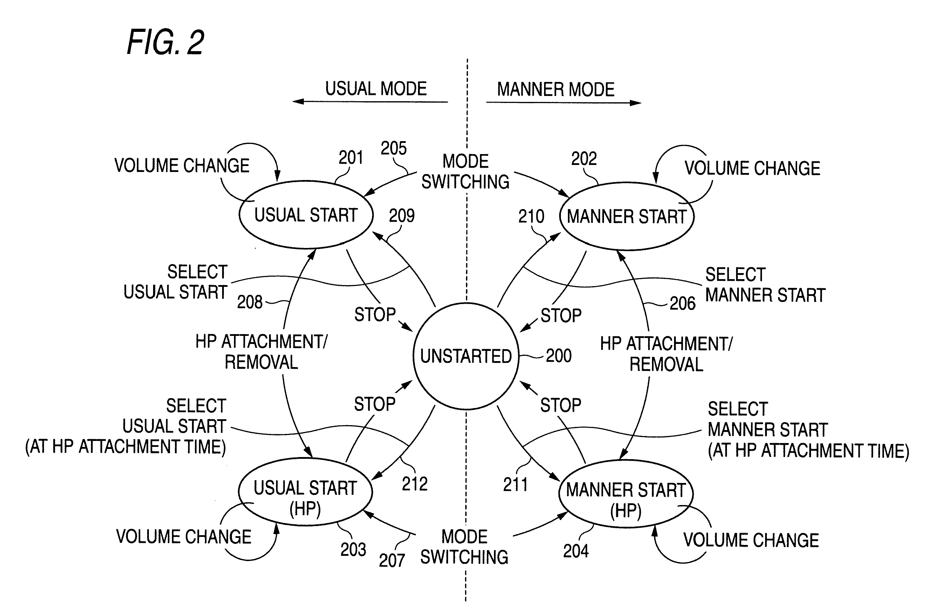

Next, a management method of a running mode and a volume control method at the mode transition time will be discussed with reference to FIGS. 2, 3, 4, 5, 6, 7, and 8.

FIG. 2 shows an example of mode management in the sound output management section 109. The mode is started at unstarted 200 in which TV viewing/playing is not yet started and makes a transition from one to another among five modes containing usual start 201, manner start 202, usual start (HP: Head Phone) 203, and manner start (HP: Head Phone) 204. The usual start 201 and the usual start (HP) 203 are each a general TV running mode and either is applied depending on whether or not headphones are attached. The manner start 202 and the manner start (HP) 204 are each a manner mode used in a public place, etc., and either is applied depending on whether or not headphones are attached like the usual start mentioned above. The mode transition is made with user's mode selection/change operation or headphone attachment/removal as a trigger. If volume change only is made, a transition is made to the same mode.

A transition is made to the usual start 201 according to usual start selection 209 by pressing a TV start key, etc., from the unstarted 200 and in addition, can also be made to the usual start 201 according to mode switching 205 by pressing a mode switch key, etc., from the manner start 202 or according to HP attachment/removal 208 by headphone attachment/removal, etc., from the usual start (HP) 203. A transition is made to the manner start 202 according to manner start selection 210 by pressing a TV manner start key, etc., from the unstarted 200 and in addition, can also be made to the manner start 202 according to the mode switching 205 by pressing the mode switch key, etc., from the usual start 201 or according to HP attachment/removal 206 by headphone attachment/removal, etc., from the manner start (HP) 204.

A transition is made to the usual start (HP) 203 according to usual start selection (at HP attachment time) 212 by pressing the TV start key, etc., from the unstarted 200 and in addition, can also be made to the usual start (HP) 203 according to mode switching 207 by pressing the mode switch key, etc., from the manner start (HP) 204 or according to HP attachment/removal 208 by headphone attachment/removal, etc., from the usual start 201. A transition is made to the manner start (HP) 204 according to manner start selection (at HP attachment time) 211 by pressing the TV manner start key, etc., from the unstarted 200 and in addition, can also be made to the manner start (HP) 204 according to the mode switching 207 by pressing the mode switch key, etc., from the usual start (HP) 203 or according to HP attachment/removal 206 by headphone attachment/removal, etc., from the manner start 202.

A transition is made to the unstarted 200 according to TV function stop, etc., from any of other four modes.

For example, although the user starts viewing by muting the sound volume inside a train, if the user switches to headphones midway and continues the viewing and terminates the viewing, a mode transition is made from the unstarted 200 to the manner start 202 to the manner start (HP) 204 to the unstarted 200.

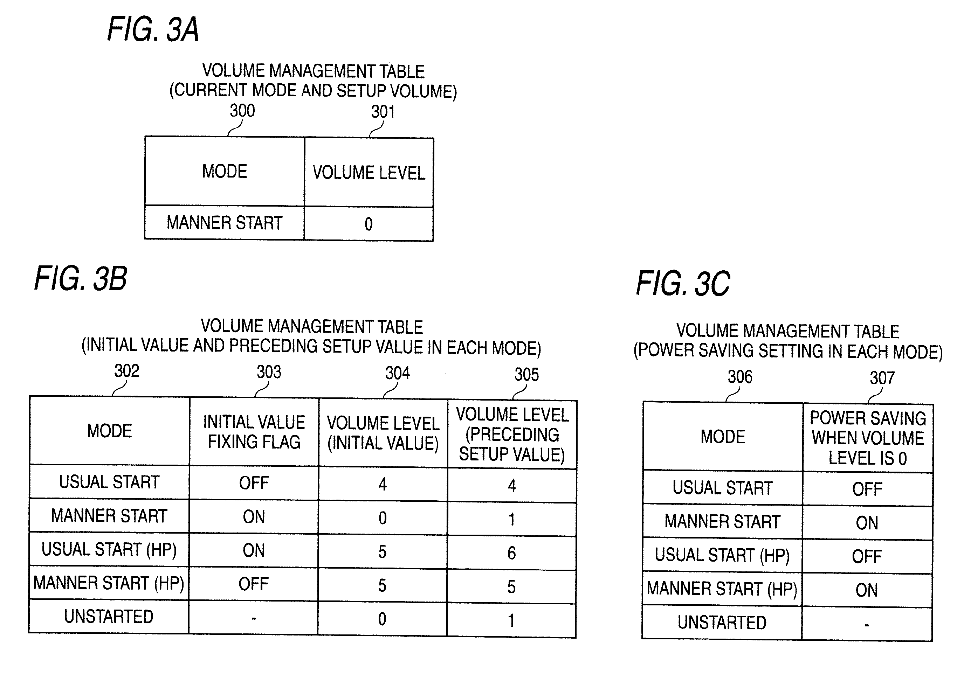

FIGs. 3A to C show examples of volume management tables managed by the sound output management section 109 or the volume management section 110. The volume management table in Fig. 3A stores current running mode 300 and selected volume level 301 and is updated in response to mode transition or volume change. Information of the volume management section 110 and the UI management section 111 is received and the table is managed in the sound output management section 109.

An initial value 304 and a preceding setup value 305 of the volume level in each running mode 302 are managed in the volume management table in FIG. 3B. An initial value fixing flag 303 is a flag for determining whether a fixed value or the final setup value at the previous running time in the same mode is set in the volume initial value selected at the mode transition time, and can be set by the user for each mode. For the initial value 304 of the volume level, if the initial value fixing flag is ON, the value preset by the user remains unchanged. If the initial value fixing flag is OFF, when a transition is made from the mode to another mode, the value is updated to the same value as the preceding setup value 305. Of course, when the user changes the initial value fixing flag 303, if the flag is ON, the value is the fixed value and if the flag is OFF, the value is updated to the same value as the preceding setup value of the mode. The preceding setup value 305 of the volume level is updated when a transition is made from the mode to another mode. For example, in Fig. 3B, the initial value fixing flag 303 is OFF in the usual running mode and thus the preceding setup value and the initial value of the volume level are the same, "4." This means that a transition is made to another mode in a state in which the user finally selects volume level 4 and thus the initial value of the volume level in the next usual running mode is also 4. On the other hand, the initial value fixing flag 303 is ON in the usual start (HP) mode and thus the preceding setup value is "6," but the initial value of the volume level in the next usual start (HP) mode differs from the user-specified fixed value 5.

The volume management table in FIG. 3C stores a power saving setting flag 307 at the volume muting time (volume level 0) in each running mode 306, and the user can preset the flag. When the flag 307 is ON, if volume level 0 is selected, the sound output management section 109 causes the TV broadcast data decoding section (Audio) 105 to stop decoding processing, whereby power saving can be accomplished.

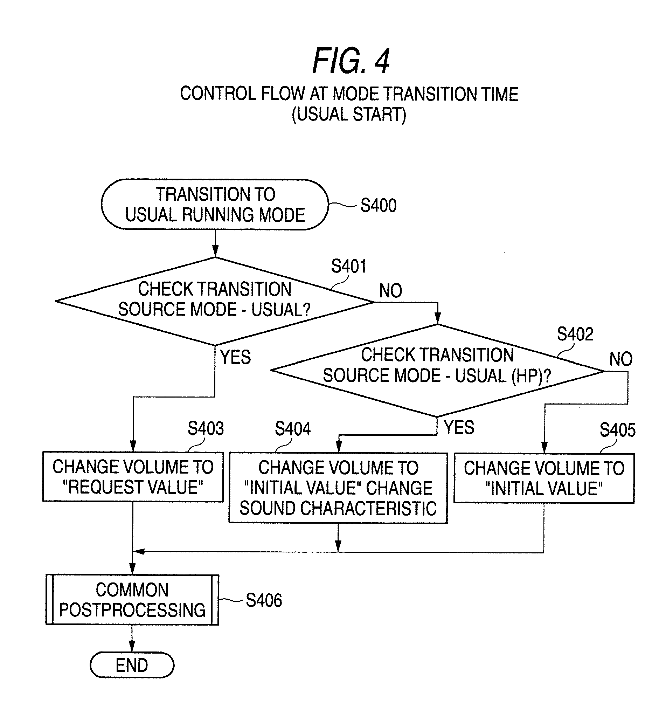

FIGs. 4 to 8 show examples of control flows at the mode transition time. FIG. 4 shows a control flow when a transition is made to the usual running mode. In the figure, when a transition is made to the usual running mode (step S400), transition source mode is checked in order (steps S401 and S402). If the transition source is the usual running mode, namely, is the same mode, the volume is changed to the requested volume level according to volume change (step S403). If the transition source is the usual start (HP) mode, volume change to the initial value 304 stored in the volume management table and sound characteristic change based on the presence or absence of headphones are made (step S404). Otherwise, the volume is changed to the initial value 304 stored in the volume management table according to volume change (step S405). In any case, common postprocessing (step S406) is executed and the processing flow is terminated.

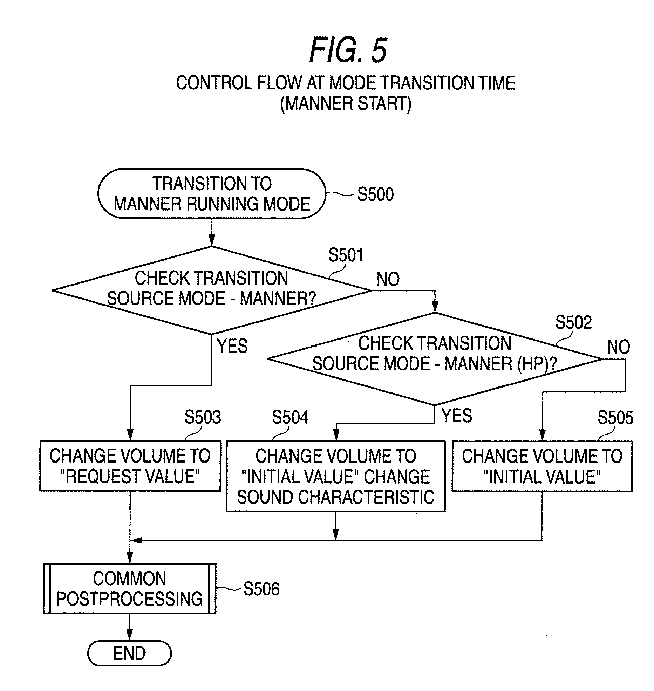

FIG. 5 shows a control flow when a transition is made to the manner running mode. In the figure, when a transition is made to the manner running mode (step S500), transition source mode is checked in order (steps S501 and S502). If the transition source is the manner running mode, namely, is the same mode, the volume is changed to the requested volume level according to volume change (step S503). If the transition source is the manner start (HP) mode, volume change to the initial value 304 stored in the volume management table and sound characteristic change based on the presence or absence of headphones are made (step S504). Otherwise, the volume is changed to the initial value 304 stored in the volume management table according to volume change (step S505). In any case, common postprocessing (step S506) is executed and the processing flow is terminated.

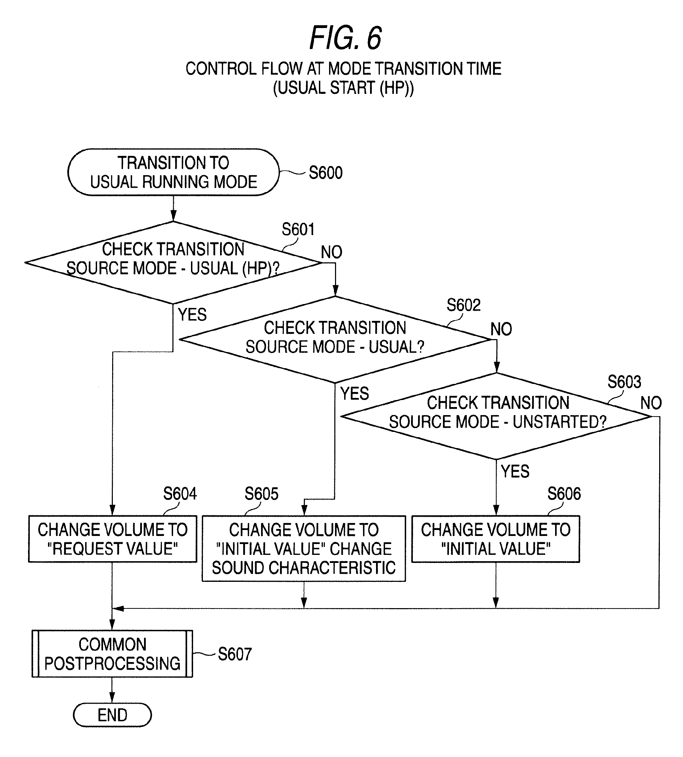

FIG. 6 shows a control flow when a transition is made to the usual start (HP) mode. In the figure, when a transition is made to the usual start (HP) mode (step S600), transition source mode is checked in order (steps S601, S602, and S603). If the transition source is the usual start (HP) mode, namely, is the same mode, the volume is changed to the requested volume level according to volume change (step S604). If the transition source is the usual running mode, volume change to the initial value 304 stored in the volume management table and sound characteristic change based on the presence or absence of headphones are made (step S605). If the transition source is the unstarted mode, the volume is changed to the initial value 304 stored in the volume management table according to volume change (step S606). Otherwise, namely, if the transition source is the manner start (HP) mode, volume change is not made. Since the situation in which the headphones are being used does not change, it is not necessary to change the volume level. In any case, common postprocessing (step S607) is executed and the processing flow is terminated.

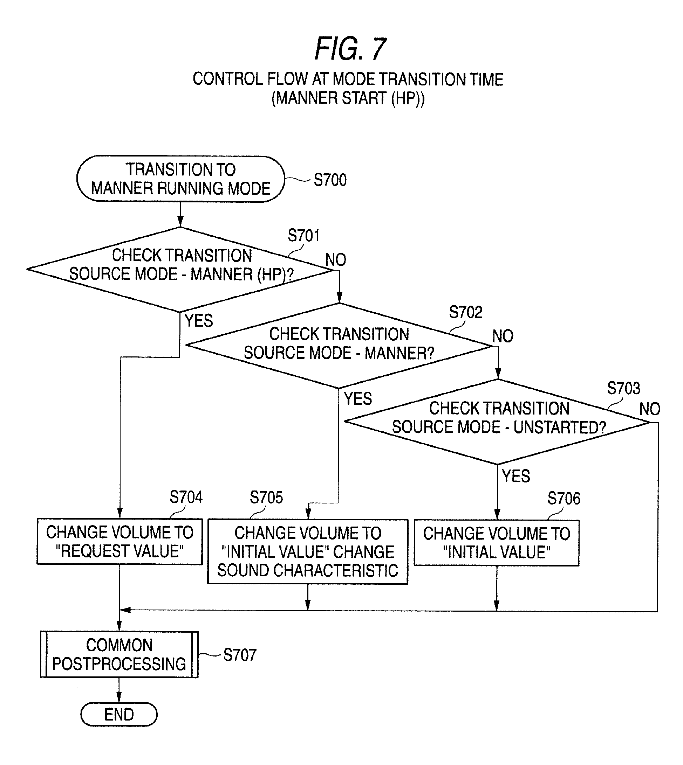

FIG. 7 shows a control flow when a transition is made to the manner start (HP) mode. In the figure, when a transition is made to the manner start (HP) mode (step S700), transition source mode is checked in order (steps S701, S702, and S703). If the transition source is the manner start (HP) mode, namely, is the same mode, the volume is changed to the requested volume level according to volume change (step S704). If the transition source is the manner running mode, volume change to the initial value 304 stored in the volume management table and sound characteristic change based on the presence or absence of headphones are made (step S705). If the transition source is the unstarted mode, the volume is changed to the initial value 304 stored in the volume management table according to volume change (step S706). Otherwise, namely, if the transition source is the usual start (HP) mode, volume change is not made, because it is not necessary to change the volume level as described above. In any case, common postprocessing (step S707) is executed and the processing flow is terminated.

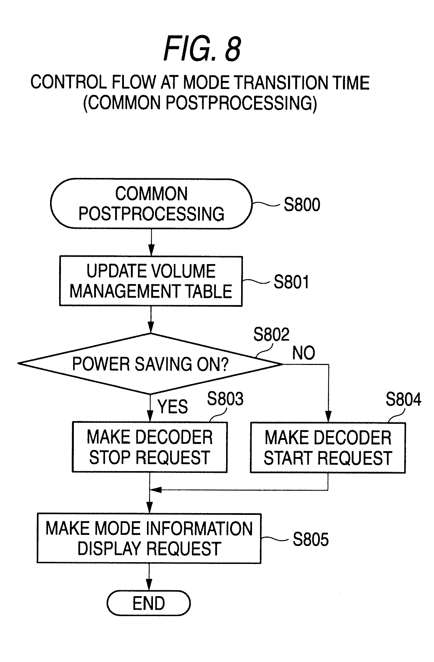

FIG. 8 shows a detailed flow of common postprocessing step S406, S506, S607, S707 in FIGs. 4 to 7. In FIG. 8, in common postprocessing (step S800), first the volume management tables are updated (step S801). Specifically, the current mode and volume level in the volume management table shown in FIG. 3 (a) are updated and the volume initial value and preceding setup value of the transition source mode are updated in the volume management table shown in FIG. 3 (b). Next, the TV broadcast data decoding section (Audio) 105 is requested to stop decoding (step S803) or is requested to start decoding (step S804) in accordance with the result of power saving flag check (step S802). Last, to send information concerning the current mode to the user, a mode information display request is issued to the display output control section 106 (step S805).

Thus, running mode management and volume control can be executed comparatively easily and the user can break free from the inconvenience of volume change, etc., depending on the use environment and the use style.

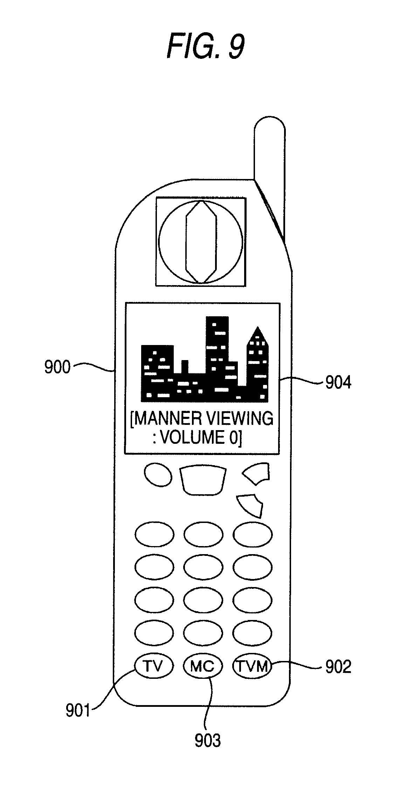

Last, a mobile terminal that can be started as TV manner start will be discussed with reference to FIG. 9. FIG. 9 shows an example of a mobile terminal installing TV manner start keys. A TV usual start key 901, a TV manner start key 902, and a running mode switch key 903 are installed in a mobile terminal 900.

If the TV usual start key 901 is pressed in a TV function stop state, a transition is made to the usual running mode. In FIG. 2, a mode transition is made from the unstarted 200 to the transition path 209 to the usual start 201. If the TV manner start key 902 is pressed in a TV function stop state, a transition is made to the manner running mode. In FIG. 2, a mode transition is made from the unstarted 200 to the transition path 210 to the manner start 202. If the running mode switch key 903 is pressed when the mobile terminal is started in any mode, a transition is made to an opposite mode. In FIG. 2, it corresponds to the transition path 205. If headphones are attached, a mode transition is made to the usual start (HP) 203, the manner start (HP) 204 in a similar manner. The keys need not be dedicated keys; short press operation and long press operation may be used with a single key or a menu selection manner may be adopted. Mode information and volume information are displayed on an LCD display section 904, whereby the convenience of the user is also improved.

FIG. 9 images a mobile-phone, but the invention can also be applied to a PDA, a personal computer, a portable TV, a stationary TV, a remote controller of a stationary TV, etc. That is, to mute the volume when power is turned on, the mode management and the volume control of the invention can be implemented and a manner start button can be installed.

While the invention has been described in detail with reference to the specific embodiment, it will be obvious to those skilled in the art that various changes and modifications can be made without departing from the spirit and the scope of the invention.

This application is based on Japanese Patent Application (No. 2006-212987) filed on August 4, 2006, which is incorporated herein by reference.

### Industrial Applicability

The invention has the advantages that the volume level can be controlled automatically when TV broadcast viewing is started or headphones are attached or removed, and can be applied to electronic devices of a mobile terminal, a PDA, a personal computer, a portable TV, a stationary TV, a remote controller of a stationary TV, etc, having a TV reception function.

## Claims

1. A running mode management method in TV broadcast viewing or record data playing of an electronic device including TV broadcast reception unit which receives a TV broadcast wave, wherein
running modes of usual running to usually view TV or record data, manner running to view TV or record data in a place where manners are required, headphone use usual running to usually view TV or record data with headphones, and headphone use manner running to view TV or record data with headphones in a place where manners are required are managed separately and transition of each of the running modes and volume control proper to the mode transition or the transition destination mode are performed with predetermined operation of a user as a trigger.

2. The running mode management method as claimed in claim 1, wherein running operation, volume change operation, and headphone attachment/removal operation of the user are included.

3. The running mode management method as claimed in claim 1 or 2, wherein the electronic device including TV broadcast reception unit which receives a TV broadcast wave is a mobile terminal.

4. A volume control method in TV broadcast viewing or record data playing of an electronic device including TV broadcast reception unit which receives a TV broadcast wave, wherein
a user is allowed to set either a fixed value proper to the mode transition or the transition destination mode, or the final setup value at the previous running time in the same mode as a volume initial value just after each running mode transition in response to each of running modes of usual running to usually view TV or record data, manner running to view TV or record data in a place where manners are required, headphone use usual running to usually view TV or record data with headphones, and headphone use manner running to view TV or record data with headphones in a place where manners are required.

5. The volume control method as claimed in claim 4, wherein the user is allowed to make setting as to whether or not sound decoding processing is to be stopped at the volume muting time in response to each of the running modes.

6. The volume control method as claimed in claim 4 or 5, wherein the electronic device including TV broadcast reception unit which receives a TV broadcast wave is a mobile terminal.

7. An electronic device, comprising:
a TV broadcast reception unit which receives a TV broadcast wave; and
a record data playing unit which plays record data, the electronic device comprising:
an operation unit operated by a user; and
a running mode management unit which separately manages running modes of usual running to usually view TV or record data, manner running to view TV or record data in a place where manners are required, headphone use usual running to usually view TV or record data with headphones, and headphone use manner running to view TV or record data with headphones in a place where manners are required and performs transition of each of the running modes and volume control proper to the mode transition or the transition destination mode with user's operation of the operation unit as a trigger.

8. The electronic device as claimed in claim 7, wherein running operation, volume change operation, and headphone attachment/removal operation of the user are included.

9. The electronic device as claimed in claim 7 or 8, wherein the running mode management unit sets the manner running mode when manner running operation is performed in unstarted, sets the manner running mode when running mode switching operation is performed in the usual running mode, sets the headphone use manner running mode when headphone use manner running operation is performed in unstarted, sets the headphone use manner running mode when running mode switching operation is performed in the headphone use usual running mode, sets the headphone use manner running mode when headphones are inserted in the manner running mode, and sets the manner running mode when headphones are removed in the headphone use manner running mode.

10. The electronic device as claimed in any of claims 7 to 9, comprising volume control unit which allows the user to set either a fixed value proper to the mode transition or the transition destination mode, or the final setup value at the previous running time in the same mode as a volume initial value just after each running mode transition in response to each of running modes of usual running to usually view TV or record data, manner running to view TV or record data in a place where manners are required, headphone use usual running to usually view TV or record data with headphones, and headphone use manner running to view TV or record data with headphones in a place where manners are required.

11. The electronic device as claimed in claim 10 wherein the volume control unit allows the user to make setting as to whether or not sound decoding processing is to be stopped at the volume muting time in response to each of the running modes.

12. The electronic device as claimed in any of claims 7 to 11 wherein the electronic device including TV broadcast reception unit which receives a TV broadcast wave and the record data playing unit which plays record data is a mobile terminal.

13. A controller capable of remotely controlling an electronic device for enabling a user to view a TV broadcast and play record data, the controller comprising:
a key input unit for performing manner running; and
a running mode management unit which separately manages running modes of usual running to usually view TV or record data, manner running to view TV or record data in a place where manners are required, headphone use usual running to usually view TV or record data with headphones, and headphone use manner running to view TV or record data with headphones in a place where manners are required, sets the manner running mode when manner running operation is performed in unstarted, sets the manner running mode when running mode switching operation is performed in the usual running mode, sets the headphone use manner running mode when headphone use manner running operation is performed in unstarted, sets the headphone use manner running mode when running mode switching operation is performed in the headphone use usual running mode, sets the headphone use manner running mode when headphones are inserted in the manner running mode, and sets the manner running mode when headphones are removed in the headphone use manner running mode.
